# EUROPEAN PATENT APPLICATION

(11) **EP 2 333 284 A2**
(43) Date of publication of application: **15.06.2011**
(21) Application number: 10170767.7
(22) Date of filing: 26.07.2010
(51) Int. Cl.: F02D 41/40, F02D 41/12, F02D 41/08, F01N 9/00, F02D 33/02

(54) **Regeneration method for diesel particulate filter**

(30) Priority: 02.12.2009 KR 20090118717
(71) Applicant: HYUNDAI MOTOR COMPANY, Seoul (KR); KIA Motors Corporation, Seoul (KR)
(72) Inventor: Kim, Gyuhong, Hwaseong-si (KR)
(74) Representative: Viering, Jentschura & Partner

(57) **Abstract**

A regeneration control method of a particulate filter, may include regenerating the particulate filter, determining whether an engine is in an idle condition or in an over-run condition (S106,S112), and controlling the regeneration of the particulate filter according to the idle condition or the over-run condition (S107,S113).

## Description

### CROSS-REFERENCE TO RELATED APPLICATION

The present application claims priority to Korean Patent Application No. 10-2009-0118717 filed in the Korean Intellectual Property Office on December 2, 2009, the entire contents of which is incorporated herein for all purposes by this reference.

### BACKGROUND OF THE INVENTION

### Field of the Invention

The present invention relates to a particulate filter. More particularly, the present invention relates to a particulate filter regeneration method in a process of regenerating the particulate filter.

### Description of Related Art

Since a diesel engine is excellent in terms of output power and the fuel consumption thereof is less than other kinds of engines, the number of diesel engine vehicles has been on the increase, and installing a particulate filter (PF) is generalized to reduce particulate materials corresponding to the Euro 5 reinforced exhaust gas regulations.

The particulate filter filters the particulate materials like soot included in the exhaust gas, and the filtered particulate materials are eliminated by exhaust gas at 500 - 600°C that is heated by post-injection of fuel in a case that the vehicle is driven a predetermined distance or a pressure difference between both ends of the filter is larger than a predetermined value.

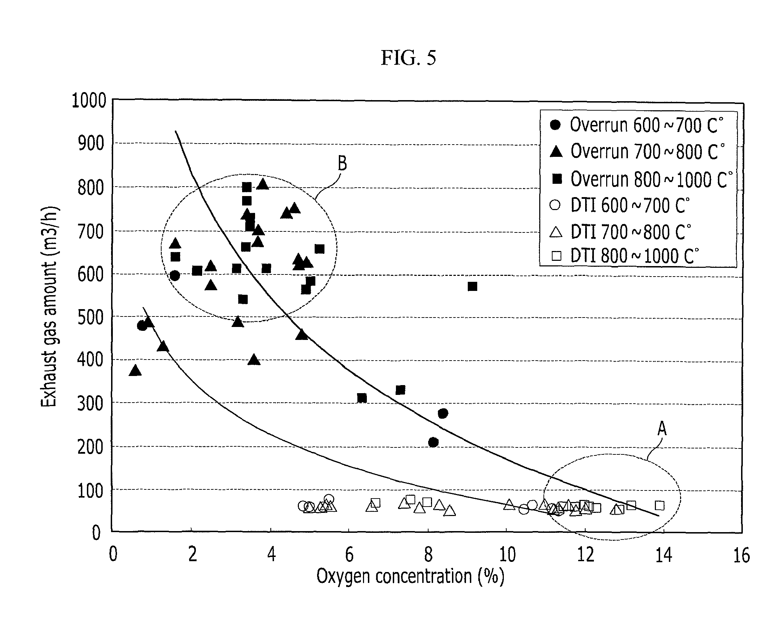

As shown in FIG. 5, while the engine enters into an idle condition, the exhaust gas flow amount becomes small and the oxygen concentration becomes high such that the particulate filter is abnormally regenerated.

Also as shown in FIG. 5, while the engine enters into an over-run condition, the exhaust gas flow amount becomes larger and the oxygen concentration becomes low such that the particulate filter is abnormally regenerated.

In a case that the engine enters into an idle or an over-run condition, since the same abnormal regeneration method is applied to regenerate the particulate filter through a post fuel injection control, there is a problem that the durability of the particulate filter is deteriorated.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY OF THE INVENTION

Various aspects of the present invention are directed to provide a regeneration control method of a particulate filter having advantages of controlling regeneration of the particulate filter if the vehicle enters into an idle condition or into an over-run condition.

In an aspect of the present invention, the regeneration control method of a particulate filter, may include regenerating the particulate filter, determining whether an engine is in an idle condition or in an over-run condition, and controlling the regeneration of the particulate filter according to the idle condition or the over-run condition.

The particulate filter may be regenerated by adjusting a fuel injection amount and/or an exhaust gas recirculation (EGR) rate in the idle condition of the vehicle, wherein the fuel injection amount is adjusted while an oxygen concentration of an exhaust gas is equal to or higher than a predetermined value and while an inlet temperature of the particulate filter is equal to or higher than a predetermined value.

The particulate filter may be regenerated when change ratio of the fuel injection amount is higher than zero.

The particulate filter may be regenerated by adjusting a fuel injection amount, an intake air amount and/or an EGR rate in the over-run condition of the vehicle, wherein the over-run condition is a state in which an accelerator pedal is not pushed and engine RPM is over idling RPM of the engine, wherein the fuel injection amount, the intake air amount and /or the EGR rate are adjusted while the fuel injection amount is equal to or higher than a predetermined value and while an exhaust gas amount is equal to or higher than a predetermined value.

The regeneration control method of the particulate filter may further include continuously controlling the regeneration of the particulate filter according to the idle condition or the over-run condition while an inlet temperature of the particulate filter is larger than or equal to a predetermined value.

In another aspect of the present invention, the regeneration control method of a particulate filter may include determining whether the particulate filter is regenerated in an abnormal condition, determining a cause of the abnormal condition, regenerating the particulate filter according to an oxygen concentration and an inlet temperature of the particulate filter in an idle stop condition, and regenerating the particulate filter according to a fuel injection amount and an exhaust gas amount in an over-run condition.

In the present invention, as stated above, the particulate filter is actively controlled according to the idle condition or the over-run condition of the vehicle during the regeneration of the particulate filter such that the reliability of the particulate filter and the durability of the vehicle are improved.

The methods and apparatuses of the present invention have other features and advantages which will be apparent from or are set forth in more detail in the accompanying drawings, which are incorporated herein, and the following Detailed Description of the Invention, which together serve to explain certain principles of the present invention.

### BRIEF DESCRIPTION OF THE DRAWINGS

FIG. 1 is showing a regeneration control apparatus of a particulate filter according to an exemplary embodiment of the present invention.

FIG. 2 is a flowchart for regeneration control of a particulate filter according to an exemplary embodiment of the present invention.

FIG. 3 is a flowchart showing an abnormal regeneration control procedure in an entry to an idle condition according to an exemplary embodiment of the present invention.

FIG. 4 is a flowchart showing an abnormal regeneration control procedure in an overrun condition according to an exemplary embodiment of the present invention.

FIG. 5 is showing a relationship between an oxygen concentration and an exhaust gas amount.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION OF THE INVENTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

The present invention will be described more fully hereinafter with reference to the accompanying drawings, in which exemplary embodiments of the invention are shown.

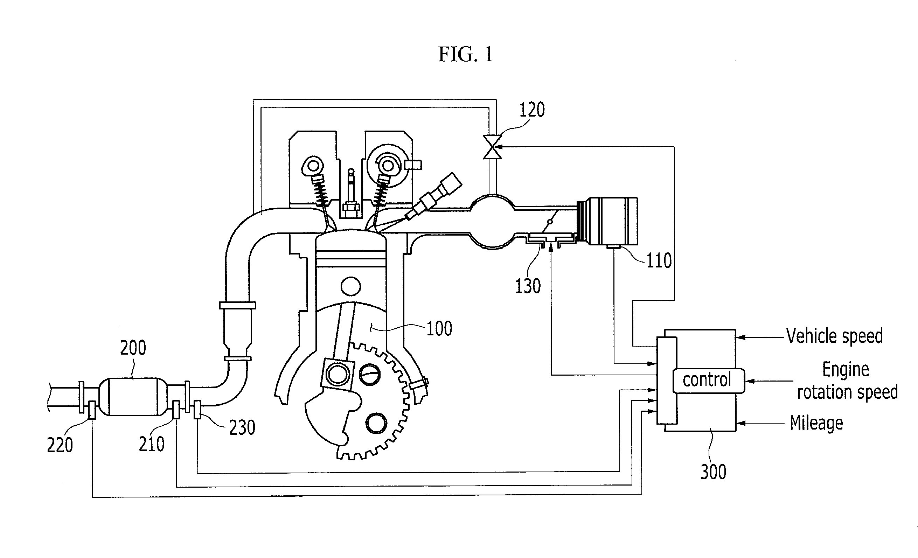

FIG. 1 is showing a regeneration control apparatus of a particulate filter according to an exemplary embodiment of the present invention.

The present invention includes an engine 100, an air flow sensor 110, an exhaust gas recirculation (EGR) valve 120, a throttle valve 130, a particulate filter 200, a first oxygen sensor 210, a second oxygen sensor 220, a temperature sensor 230, and a control portion 300.

The air flow sensor 110 is disposed at a position of an intake manifold, and detects an intake air amount supplied into the engine 100 to transfer the detected signal to the control portion 300.

The EGR valve 120 adjusts a recirculated exhaust gas amount to lower the combustion temperature of the engine 100, and reduces the NOx amount generated in the combustion stroke of the engine 100.

The particulate filter 200 traps particulate material (PM) like soot included in the exhaust gas, and the trapped PM is burned by the heat of the exhaust gas that is heated by fuel injected in a regeneration mode so as to regenerate the particulate filter 200.

The first oxygen sensor 210 detects an oxygen concentration of the exhaust gas flowing into the front portion of the particulate filter 200 the detected signal to the control portion 300.

The second oxygen sensor 220 that is disposed at a downstream side of the particulate filter 200 detects an oxygen concentration of the exhaust gas to transfer the detected signal to the control portion 300.

The temperature sensor 230 detects the temperature of the exhaust gas flowing into the particulate filter 200 to offer the detected temperature signal to the control portion 300.

The control portion 300 monitors vehicle speed, engine speed, oxygen concentration, an accelerator pedal, and so on, and determines whether the vehicle is in an idle condition or in an over-run condition during the regeneration of the particulate filter 200.

In a condition in which the particulate filter 200 is being regenerated, if the vehicle enters into an idle condition where the rotation speed of the engine is low and the vehicle speed is almost zero, the control portion 300 adjusts a fuel injection amount and an opening rate of the EGR valve 120 according to the oxygen concentration of the exhaust gas and the inlet temperature of the particulate filter 200. Accordingly, the oxygen concentration and the inlet temperature are increased so as to efficiently perform the regeneration of the particulate filter in the idle condition. If the fuel injection amount is increased, the oxygen concentration is decreased and the inlet temperature is increased to a predetermined value.

In a condition in which the particulate filter 200 is being regenerated, if the vehicle enters into an over-run condition where the accelerator pedal is not operated and the vehicle speed is higher than a predetermined value, the control portion 300 adjusts the fuel injection amount, and the opening rate of the throttle valve 130 and the EGR valve 120. For example, because the accelerator pedal is not operated and the engine RPM is increased by the engine braking in the over-run condition, the oxygen concentration is high and the inlet temperature is decreased such that the regeneration ratio of the particulate filter is deteriorated. However, in the exemplary embodiment of the present invention, the fuel injection amount is increased and the intake air amount is decreased by the fuel injector, the throttle valve, and the EGR valve such that the regeneration rate of the PF is increased.

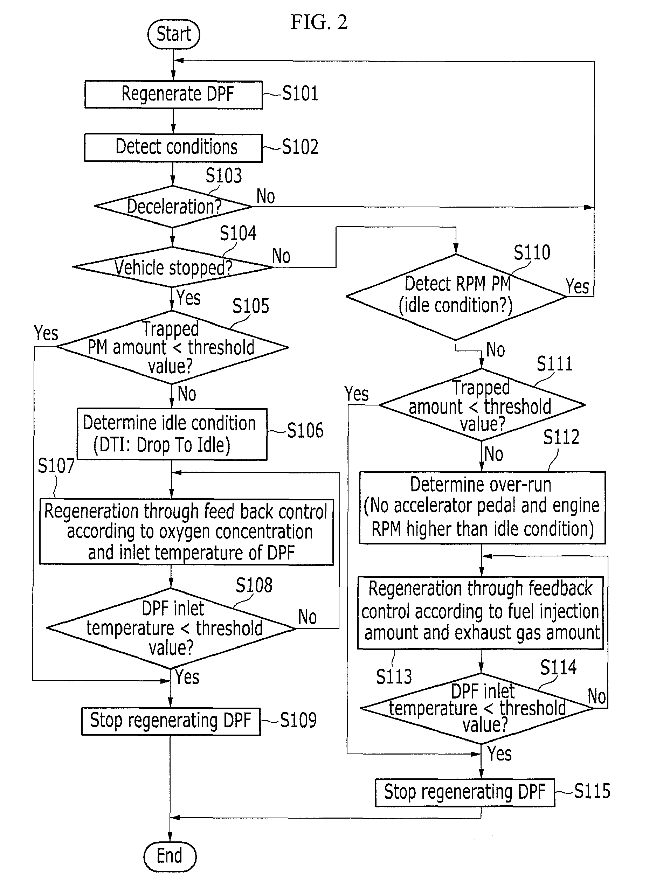

Referring to FIG. 2, the operations of the present invention including the functions as stated above will be explained as follows.

While the particulate filter 200 is being regenerated (S101), the control portion 300 detects vehicle speed, engine speed, oxygen concentration, and the inlet temperature of the particulate filter 200 (S102), and determines whether the vehicle is decelerating (S103).

If the deceleration of the vehicle is not found in S 103, it is returned to S101 and the particulate filter 200 is normally regenerated, and if the vehicle is decelerating, it is determined whether the vehicle stops (S104).

If the vehicle stops in S 104, it is determined whether the regeneration is completed (S105) by comparing a trapped PM amount and a predetermined threshold value according to the regeneration of the particulate filter 200.

If it is determined that the particulate filter 200 is regenerated in S 105, regeneration control is ended (S109).

However, if it is determined that the particulate filter 200 is not regenerated in S105, it determines whether the vehicle is in an idle condition (S106).

If it is determined that the vehicle enters into the idle condition in S 106, abnormal regeneration is performed according to the inlet temperature of the particulate filter 200 and the oxygen concentration (S107).

It is determined whether the inlet temperature of the particulate filter 200 is less than a predetermined value during the abnormal regeneration (S108), and if the inlet temperature is higher than the predetermined value, it is returned to S107 and the abnormal regeneration is performed, while if the inlet temperature is less than the predetermined value, it is determined that the particulate filter 200 is completely regenerated (S109).

Also, if it is determined that the vehicle speed is not zero in S 104, it is determined whether the engine enters into an idle condition (S 110) by detecting a increment or a decrement of engine RPM.

If the engine enters into the idle condition in S 110, it is returned to S 101 to normally regenerate the particulate filter 200, and if the engine does not enter into the idle condition, the trapped PM amount and a predetermined threshold value are compared (S111).

If it is determined that the particulate filter 200 is completely regenerated in S111, the regeneration process is ended (S115), and if it is determined that the particulate filter 200 is not regenerated, it is determined whether the engine is on an over-run condition (S 112).

If the engine enters into the over-run condition in S 112, abnormal regeneration is performed through feedback control according to fuel injection amount and exhaust flow amount (S113).

It is determined whether the inlet temperature of the particulate filter is less than a predetermined value during the abnormal regeneration process (S 114), and if the inlet temperature is higher than the predetermined value, it is returned to S 113 to repeat the abnormal regeneration process, and if the inlet temperature is less than the predetermined value, it is determined that the regeneration of the particulate filter 200 is completed so as to be ended (S 115).

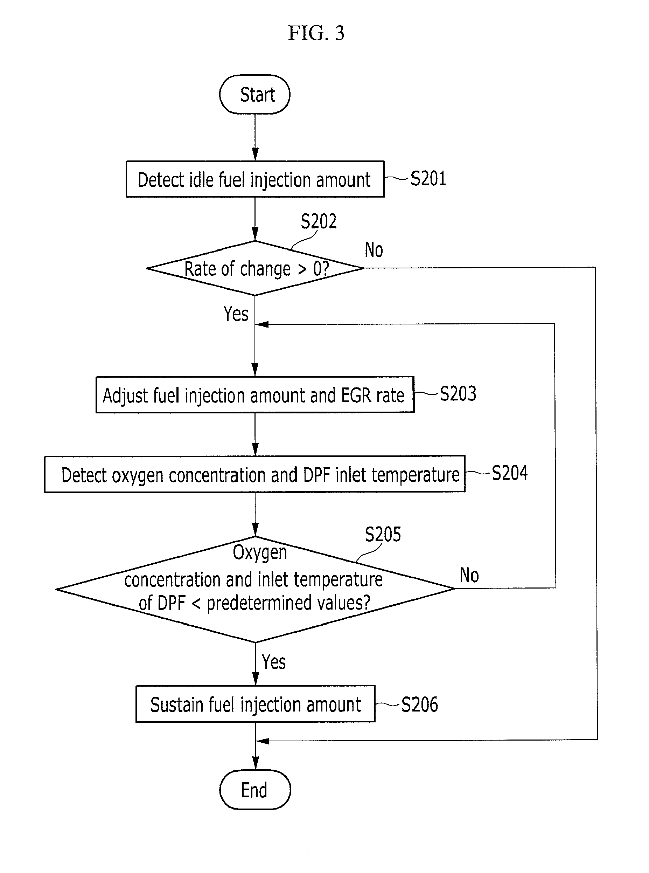

Referring to FIG. 3, abnormal regeneration according to entry into the idle condition will be explained as follows.

An idle fuel injection amount is detected during the abnormal regeneration (S201), and it is determined whether the fuel injection amount is changed (S202).

If the idle fuel injection amount is changed in S202, the regeneration of the particulate filter 200 is controlled by adjusting the recirculating exhaust gas amount through the EGR valve 120 and the fuel injection amount (S203).

The oxygen concentration of the exhaust gas and the inlet temperature of the particulate filter 200 are then detected (S204) to be compared with reference values (205).

If the oxygen concentration is less than a predetermined value and the inlet temperature of the particulate filter 200 is less than a predetermined value in S205, the present fuel injection amount is sustained to operate the abnormal regeneration process (S206).

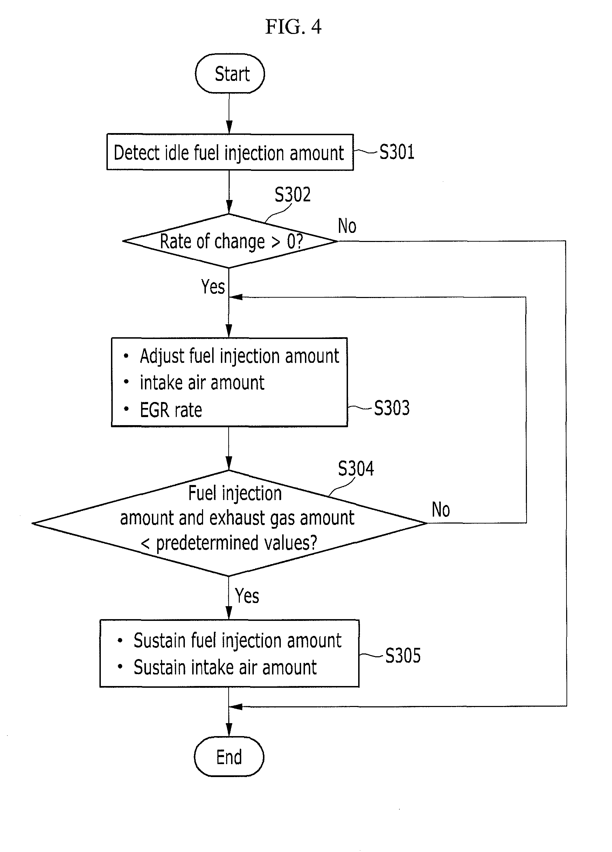

Referring to FIG. 4, an abnormal regeneration process according to the over-run will be explained as follows.

An idle fuel injection amount is detected during the abnormal regeneration process (S301), and it is determined whether the fuel injection amount is changed (S302).

If the idle fuel injection amount is changed in S302, the recirculating exhaust gas is controlled by adjusting the fuel injection amount, the intake air amount, and the EGR valve 120 to control the abnormal regeneration of the particulate filter 200 (S303).

Further, the fuel injection amount and the exhaust gas amount are detected, and if the fuel injection amount and the exhaust gas amount are respectively less than a predetermined value (S304), the fuel injection amount and the intake air amount are sustained to perform the abnormal regeneration according to the over-run of the vehicle (S305).

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A regeneration control method of a particulate filter, comprising:
regenerating the particulate filter;
determining whether an engine is in an idle condition or in an over-run condition; and
controlling the regeneration of the particulate filter according to the idle condition or the over-run condition.

2. The regeneration control method of the particulate filter of claim 1, wherein the particulate filter is regenerated by adjusting a fuel injection amount and/or an exhaust gas recirculation (EGR) rate in the idle condition of the vehicle.

3. The regeneration control method of the particulate filter of claim 2, wherein the fuel injection amount is adjusted while an oxygen concentration of an exhaust gas is equal to or higher than a predetermined value and while an inlet temperature of the particulate filter is equal to or higher than a predetermined value.

4. The regeneration control method of the particulate filter of claim 2, wherein the particulate filter is regenerated when change ratio of the fuel injection amount is higher than zero.

5. The regeneration control method of the particulate filter of claim 4, wherein the fuel injection amount is adjusted while an oxygen concentration of an exhaust gas is equal to or higher than a predetermined value and an inlet temperature of the particulate filter is equal to or higher than a predetermined value.

6. The regeneration control method of the particulate filter of claim 1, wherein the particulate filter is regenerated by adjusting a fuel injection amount, an intake air amount and/or an EGR rate in the over-run condition of the vehicle,
wherein the over-run condition is a state in which an accelerator pedal is not pushed and engine RPM is over idling RPM of the engine.

7. The regeneration control method of the particulate filter of claim 6, wherein the fuel injection amount, the intake air amount and /or the EGR rate are adjusted while the fuel injection amount is equal to or higher than a predetermined value and while an exhaust gas amount is equal to or higher than a predetermined value.

8. The regeneration control method of the particulate filter of claim 6, wherein the particulate filter is regenerated when change ratio of the fuel injection amount is higher than zero.

9. The regeneration control method of the particulate filter of claim 8, wherein the fuel injection amount, the intake air amount and/or the EGR rate are adjusted while the fuel injection amount is equal to or higher than a predetermined value and while an exhaust gas amount is equal to or higher than a predetermined value.

10. The regeneration control method of the particulate filter of claim 1, further comprising:
continuously controlling the regeneration of the particulate filter according to the idle condition or the over-run condition while an inlet temperature of the particulate filter is larger than or equal to a predetermined value.

11. A regeneration control method of a particulate filter, comprising:
determining whether the particulate filter is regenerated in an abnormal condition;
determining a cause of the abnormal condition;
regenerating the particulate filter according to an oxygen concentration and an inlet temperature of the particulate filter in an idle stop condition; and
regenerating the particulate filter according to a fuel injection amount and an exhaust gas amount in an over-run condition.

12. The regeneration control method of the particulate filter of claim 11, further comprising:
continuously controlling the regeneration of the particulate filter according to the idle condition or the over-run condition while the inlet temperature of the particulate filter is larger than or equal to a predetermined value.
